# EUROPEAN PATENT APPLICATION

(11) **EP 1 101 562 A1**
(43) Date of publication of application: **23.05.2001**
(21) Application number: 98959909.7
(22) Date of filing: 15.12.1998
(51) Int. Cl.: B23K 33/00

(54) **PROCESS FOR THE ANGULAR JOINING OF EXTREMITIES OF SECTIONS**

(71) Applicant: Castro Gomez, Luis, 36201 Vigo (ES)
(72) Inventor: Castro Gomez, Luis, 36201 Vigo (ES)
(74) Representative: Maldonado Jordan, Julia
(86) International application number: ES9800322
(87) International publication number: WO0035624

(57) **Abstract**

The method for the angular union of extremities of sections consists in placing between the extremities and auxiliary union a part which receives, supports, combines and transmits the existing tensions at the various areas of the extremities of the sections, filling with junction material the cavities between the sections, the auxiliary junction part and the extensions of the faces of the sections in order to maintain the cross-sections of the sections in the junction material and in the auxiliary junction part at least up to the median plan thereof and thereby maintain their resistant modules. The method is applicable to the construction of any kind of junctions which have to resist to flexion forces of tubular or open sections in mobile or fixed machines and structures, such as bodies of buses, coaches, trailers, truck boxes, containers, public work machines, plough implements, constructions and industrial buildings.

## Description

Technical sector.- This method is pertinent to the mechanical and construction sectors. It refers to the joining by means of welding, forging, moulding, or by other procedures of the ends of two profiles which may be rolled, folded, welded, moulded or otherwise, as may be necessary for the construction of railway rolling-stock, and other terrestrial vehicles such as buses, trucks, tugs and cars; vessels, airships and space vehicles; for the construction of industrial premises, towers and buildings; for the construction of machines for public works, mining, industrial and farming work, and pieces and implements in general, whether metallic, plastic or of other materials. It is very convenient for the joining of metallic hollow profiles which work with bending stress.

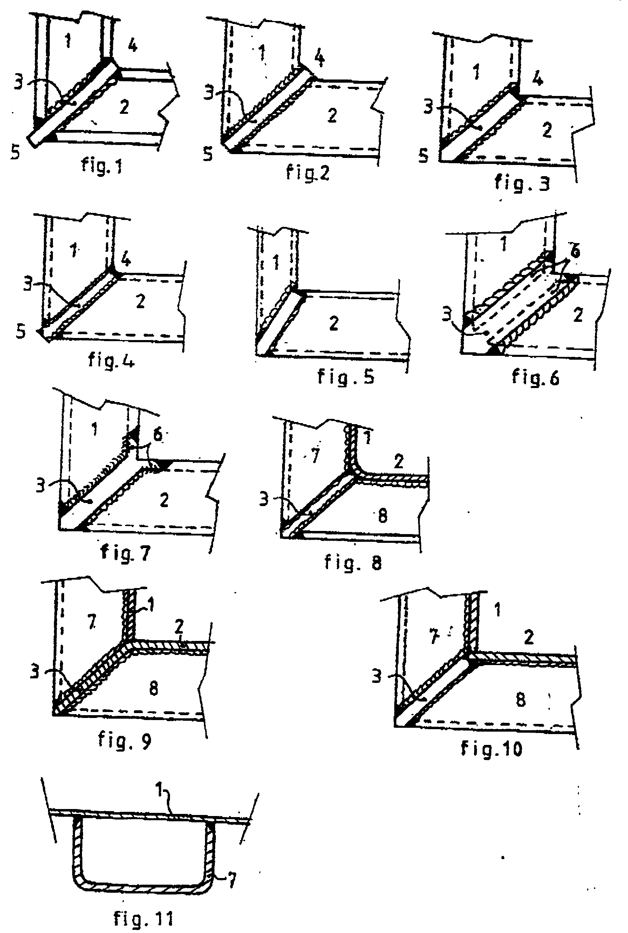

Background.- At present generally defective joining of open profiles, is performed which in some cases reaches strength approximating those of the joined profiles, such as that shown in figure 1, where (1 and 2) are a double T, (3) is the auxiliary joining piece, (4) is the concave edge of the joint,, possible when open profiles are welded, and (5) is an extension of the auxiliary joining piece, necessary to reach a maximum strength of the joint, which is sometimes absent. This is also done without inserting piece (3), which is substituted by one or two lateral pieces, which may be enough. Defective joints are also made by extending the wings of the profiles with auxiliary pieces and welding them to the interior. Very often joints are made with an auxiliary piece of insufficient width or with a small welding section and even without piece (3), with or without reinforcements in the different parts of the profile.

With regard to the joints which are currently made of closed profiles with cylindrical, square, and rectangular tubes, the situation is more serious, since we do not know that anything has been done to approximate the strength of the joined profiles. Joints with auxiliary pieces with a strength lower than 40% of the profile's strength are made. Sometimes they are reinforced with external pieces which generally do not equate to the strength of the profile, and joints such as that shown in figure 2 are also made, with insufficient strength for the local momentum which are generated in area (4) and with concentrations of stress in area (5), by reason of insufficient length of auxiliary piece (3); pieces (1 and 2) represent ends of the joined profiles.

Nobody has had the idea so far of shortening auxiliary piece (3), figure 2, in the area of the concave edge (4) and filling up the resultant groove with joining material, in order to avoid the local momentum, the addition of push and pull stresses of profiles and the corresponding reactions of the auxiliary joining piece, momentum which weakens the joints, because they are not in the same straight line.

Explanation.- Let us assume that it is a question of joining two ends of equal profiles in such a way that the angle formed by the longitudinal axes of the profiles is in the same plane as the other two equivalent axes of the profiles. In this case, we will proceed to cut the equal ends to be joined with planes normal to that of' the angle, which form, with the longitudinal axes, angles equal to half of the angle formed by the longitudinal axes, and we shall join these cut surfaces to a flat inserted auxiliary joining piece, with sufficient width that the cut surfaces remain face to face, symmetrically with regard to the centre plane of the auxiliary joining piece. All the preceding as shown in figure 3, which is a side view of a joint of two square or oblong tubes (1 and 2), with auxiliary joining piece (3). There is a concave edge (4) and a convex edge (5). It can be seen in the concave edge that the auxiliary joining piece is shorter than usual so that the joining material may be located in the extension of profiles and that stresses of the profiles may reach the auxiliary piece without shifting which otherwise may cause high stresses for the moment due to the shifting of the reactions with regard to actions. In the convex edge, (5) it can be seen that all the stresses may cross each other within the auxiliary joining piece. If there is more material of the flat piece in these edges, as may be seen in figure 4, area (5), or more joining material as in area (4), the joint is not damaged.

The major part of the auxiliary joining piece and the opening of the angle of profiles make possible the easy contribution of joining material to the area of corrugation (4), which the three pieces contain between them.

Joints of this kind are possible, though profiles are of different corner and widths, using a flat auxiliary joining piece, so long as its centre plane contains the result of push and pull stresses of the profiles that there would be if the joint only worked with bending stress, which is always possible. In figure 5 joining of this kind can be seen, in which piece (2) has more corner edge than (1).

In figure 6 and 7, variations of this method can be seen, where the welding of the concave edge is shifted some millimetres along the profiles in such a way that they are easier to weld, though they mean a higher cost due to the necessity of manufacturing auxiliary joining pieces specific to each series of equal joints. In those figures, (1 and 2) are the profiles and (3) are the auxiliary joining pieces; in figure 6 sections of profiles are (6) and in figure 7 sections of profile parts (6) which go to the concave edges.

Joints such as those described in figures 3 to 7 are of general application in construction for any kind of aquatic, terrestrial, air and space vehicles as well as m construction of machines, implements and structures, of application in works, industry, mines, agriculture, urban and household furniture.

In picture 8 a joint of profiles can be seen, made up of folded sheet (1 and 2) and reinforcements (7 and 8). The flat auxiliary piece of joint (3) is joined to the folded plate before making up the profiles. In figure 9 and 10 variations of figure 8 can be seen, with the folded auxiliary joining piece (3) of one of the sheets (2), and also if bent, the three pieces (1, 2 and 3), previously independent afterwards joined among themselves and finally with their reinforcements joined (7 and 8). In none of these cases is it difficult to weld the concave edge. In order to avoid local momentum in the concave edge, the joining material shall fill the empty spaces between the pieces' faces (1, 2 and 3). In figure 11, a section of profile composed of sheet (1) and folded reinforcement of 'u' section (7), may be seen.

Joints such as those of figures 8, 9 and 10 are very suitable for railway coaches, lorry boxes, containers and similar.

The advantages of this method is the angular joining of profiles ends are as follows:
- the joint bending force is very approximate that of the profiles.
- Minimum possible mass of joining material.
- Low cost of construction.
- Better use of space in the area of the joint.
- Good aspect of the joint. It is possible that the joining materials do not show beneath the finishing surface.
- Minimum mass of the joint profiles, since it is not necessary to oversize them to obtain the strength required in the whole.

Even the joining of open profiles which may be done pursuant to figure 1, which is not the subject of this patent; this method of joining assures more strength on also joining the rims in the areas of the interior of the profiles, which pursuant to figure 1 would be hidden and not joined, they being inaccessible.

## Claims

1. Method of angular joining of the ends of profiles, inserting between them a convex flat auxiliary joining piece, of a flat and adequate width, in such a way that the equivalent or more similar parts of the ends of both profiles shall be put face to face, as well as be possible, and in such a way that the centre plane of the auxiliary joining piece shall contain the result of all the push and pull stresses, which would be shown in both profiles if they worked exclusively with bending stress, characterised by the auxiliary joining piece leaving an empty grooved space in the concave edges of the joint, parallel to that or those concave edges of the joint, the bottom of which is the real or apparent width of the auxiliary joint piece and the side walls of the corrugation being the apparent edges of the cut ends of the profile parts which are directed to the concave edges of the joint, characterised too by the said corrugation being filled with joining material, in such a way that the section of profiles extend according to their longitudinal axes, with their form and size, in the joining material and in the auxiliary joining piece up to its centre plane, without discontinuities.

2. Method of angular joining of ends of profiles such as that described in claim 1^{st}. characterised by both ends being joined to an auxiliary joining piece which contains a flat part and two small pieces of material with the profile and direction of the profiles to be joined or only of the areas corresponding to the concave edges.

3. Method of angular union of ends of profiles as that described in claim 1^{st}. characterised by, if profiles to be joined are made up of flat flat pieces and, joined to them, reinforcements made up by simple or compound profiles, the auxiliary joining piece being able to be a folded part of one of the two flat pieces, or of both flat pieces being able to be a single folded piece and the auxiliary joining piece of another piece joined to the folded edge, or the other three previously independent pieces, characterised likewise by there not being empty spaces between the extensions of the external planes of the three flat pieces, whether folded or not, but having to be filled with joining material, also characterised by the two flat pieces being able to bear several reinforcements and characterised likewise by the auxiliary joining piece being as long as the edge which form the two flat pieces and being joined to them along the whole edge.

4. Method of angular joint of ends of profiles.
